# EUROPÄISCHE PATENTSCHRIFT

(11) **EP 2 904 150 B1**
(45) Veröffentlichungstag und Bekanntmachung des Hinweises auf die Patenterteilung: **29.11.2017**
(21) Anmeldenummer: 13765325.9
(22) Anmeldetag: 11.09.2013
(51) Int. Cl.: E01B 7/24, F24J 3/08, F28D 15/02

(54) **WÄRMEÜBERTRAGER FÜR SCHIENEN UND WEICHEN**
HEAT EXCHANGER FOR RAILS AND SWITCHES
ÉCHANGEUR DE CHALEUR POUR RAILS FERROVIAIRES ET AIGUILLES

(30) Priorität: 13.09.2012 DE 102012108586
(43) Veröffentlichungstag der Anmeldung: 12.08.2015
(73) Patentinhaber: PINTSCH BAMAG ANTRIEBS- und VERKEHRSTECHNIK GmbH, 46537 Dinslaken (DE)
(72) Erfinder: SCHINK, Damian, D-46539 Dinslaken (DE)
(74) Vertreter: Patentanwälte Olbricht Buchhold Keulertz
(86) Internationale Anmeldenummer: PCT/EP2013/068856
(87) Internationale Veröffentlichungsnummer: WO 2014/041042

(56) Entgegenhaltungen:
- EP-A2- 0 247 693
- WO-A1-2008/131732
- WO-A1-2009/109664
- WO-A1-2013/037635

## Beschreibung

Die Erfindung betrifft einen Wärmeübertrager für eine Anordnung zwischen zwei Gleisschwellen, insbesondere im Bereich von Weichen oder Schienenkreuzen, gemäß dem Oberbegriff von Anspruch 1. Ein derartiges Gerät ist aus der EP0247693A2 bekannt. Es ist bekannt, Weichen im Eisenbahnbau im Winter zu beheizen, um ein Einfrieren oder Einschneien der beweglichen Teile, insbesondere der quer zum Gleisverlauf schwenkbaren Weichenzunge, zu verhindern. Das Stellen der Weichenzunge erfolgt mittels wenigstens eines Antriebs in wenigstens einem Verschlussfach. Dabei ist die Weichenzunge auf sogenannten Gleitstühlen gelagert, welche auf den Schwellen angeordnet sind und eine Gleitfläche für die Weichenzunge ausbilden. Zusätzlich oder alternativ kommen Gleitstühle mit Rollen zum Einsatz. Sowohl auf dem Verschlussfach, den Gleitstühlen als auch in den Schwellenzwischenräumen kann sich Schnee und Eis ansammeln. Kritisch sind weiterhin enge Gleisstegabstände an Schienenkreuzungen. Auch diese werden daher beheizt.

Zur Beheizung von Weichen oder Schienenkreuzungen existieren elektrisch betriebene Heizungen, so z.B. in DE 43 25 002 A1 beschrieben, oder seltener Heizungen mit Gas- oder
Ölbrennern. Weichenheizeinrichtungen dieser Techniken haben einen hohen Energieverbrauch einhergehend mit hohen Energiekosten. Zur Energieeinsparung werden daher teilweise Steuerungen eingesetzt, sodass die Anlagen nicht permanent unterhalb einer bestimmten Temperatur beheizt werden. Diese berücksichtigen auch Parameter wie die Luftfeuchtigkeit, Umgebungstemperatur und Niederschlag um die Weichenheizung ein- oder auszuschalten. Dies funktioniert jedoch nicht bei allen Wetterlagen korrekt. Ein anderer Nachteil dieser Techniken ist ein hoher Energieverlust durch Wärmeabstrahlung an die Umgebung. Nur ein Bruchteil der erzeugten Wärme erreicht das zu schmelzende Eis.

Ökologisch initiierte Ansätze sehen Weichenheizeinrichtungen mit regenerativen Brennstoffen wie Rapsöl vor. Öl, Rapsöl und Gas haben jedoch jeweils den Nachteil, dass sie dem Ort der Verbrennung zugeführt werden müssen. Entweder werden hierfür wartungsintensive lokale Tanks oder ein Verteilernetz benötigt. Dies ist aufwendig und teuer.

Ein weiterer bekannter Ansatz ist die Beheizung von Weichen mit Erdwärme. Dies wird beispielsweise von L.L. Vasiliev in einer Veröffentlichung vom 07. Juli 1987 mit dem Titel "Heat Pipes for Ground Heating and Cooling" beschrieben. Ein Rohrsystem enthält hier ein Wärmeträgermedium und unterteilt sich in einen im Erdreich liegenden Verdampferbereich, einen an der Weiche entlanggeführten sowie rohrförmigen Kondensationsbereich und einen dazwischen liegenden Transportbereich. Das Wärmeträgermedium wird im Verdampferbereich erwärmt und verdampft. Anschließend steigt es aufgrund der geringeren Dichte nach oben, insbesondere durch den Transportbereich hindurch zum Kondensationsbereich. Bei geringen Umgebungstemperaturen kondensiert das Wärmeträgermedium schließlich im rohrförmigen Kondensationsbereich und gibt Wärme an die Rohrwandung ab. Letztere ist thermisch mit der Weiche, insbesondere einem Schienensteg oder einem Schienenfuß gekoppelt. An die Schiene und/oder den rohrförmigen Kondensationsbereich angrenzender Schnee oder Eis werden dann geschmolzen. Problematisch ist der geringe Schmelzradius um die geheizten Teile. So kommt es trotz der Beheizung zu einem Ansammeln von Schnee oder Eis zwischen dem Schienensteg und der Weichenzunge, wobei letztere blockiert werden kann.

Dieses Problem besteht auch dann, wenn der Kondensationsbereich unter Verwendung von Wärmeleitpaste an den Schienensteg geschraubt wird sowie die Schienenstege auf der Außenseite gegen Wärmeabstrahlung isoliert sind, wie es beispielsweise WO 2008/131732 A1 vorschlägt.

WO 2008/131732 A1 sieht weiterhin vor, dass ein gasdichter Wärmeübertrager eine Vielzahl an benachbarten Minikanälen in flächenhafter Anordnung aufweist. Hierdurch könne eine größere Fläche beheizt werden und der hierfür benötigte Bauraum wäre an einer Weiche vorhanden. Tatsächlich benötigt jedoch der notwendige Kondensationsraum zur Ausbildung einer Gas- und Fluid-Zirkulation einen erheblichen Bauraum durch die Vielzahl an Kanälen und verbleibendem Material. Nachteilig sind auch hohe Fertigungskosten für die Einbringung der Minikanäle von 0,3 mm bis 6 mm in den Wärmeübertrager. Diese können aufgrund des geringen Abstands zueinander nur einzeln eingebracht werden. Bohrungen sind zudem nur linear ausführbar, was die Gestaltungsfreiheit einschränkt. Die Minikanäle und damit der Wärmeübertrager sind teuer in der Fertigung und aufgrund aufwendiger Abdichtungen anfällig für Undichtigkeiten, welche zu einem Ausfall der Weichenheizeinrichtung führen können.

In WO 2008/131732 A1 skizzierte Ausbildungen des Wärmeübertragers mit einem Sickenblech zwischen einer Ober- und einer Unterschale zur Ausbildung der Minikanäle halten dem notwendigen Betriebsdruck bei Verwendung von umweltverträglichem Kohlendioxid bei einem Betriebsdruck von circa 45 bar nur bei sehr großen Wandstärken stand. Druckbedingte Verformungen des Wärmeübertragers können zu einer Blockade der Weichenzunge führen und sind unbedingt zu vermeiden. Außerdem ist die Herstellung der umlaufenden Dichtfläche zwischen Ober- und Unterschale teuer und anfällig für Undichtigkeiten. Nachteile der großen Wandstärke sind außerdem eine langsame Wärmeleitung durch die Wandung und hohe Materialkosten.

Bei der Anordnung eines Wärmeübertragers im Schwellenfach besteht außerdem das Problem, dass aufgrund der Baugröße ein großer Teil des Schotterbetts für Verdichtungsarbeiten blockiert ist.

Aufgabe der Erfindung ist es daher, die Nachteile des Standes der Technik zu beseitigen und einen Wärmeübertrager bereitzustellen, der mit wenig Wärmeenergie viel Schnee- und Eis schmelzen kann, kostengünstig in großen Stückzahlen fertigbar ist, hohen Betriebsdrücken eines in ihm befindlichen Wärmeträgermediums möglichst ohne Verformungen standhält und hinsichtlich seines Bauraums geeignet ist, platzsparend im Bereich einer Weiche, insbesondere in einem Schwellenfach, eingesetzt zu werden.

Hauptmerkmale der Erfindung sind in dem Anspruch 1 angegeben. Ausgestaltungen sind Gegenstand der Ansprüche 2 bis 18. Bei einem Wärmeübertrager für eine Anordnung zwischen zwei Gleisschwellen, insbesondere im Bereich von Weichen oder Schienenkreuzen, mit einer Kondensationskammer, in die eine Anschlussöffnung zur Verbindung mit einem Erdwärmerohr mündet, sieht die Erfindung vor, dass die Kondensationskammer längsgerichtet rohrförmig von einem Hauptbauteil radial eingefasst ist, und im Querschnitt eine Kammerdecke, einen gegenüberliegenden Kammerboden und zwei sich gegenüberliegende sowie die Kammerdecke und den Kammerboden verbindende Seitenwandungen aufweist, wobei das Hauptbauteil in Längsrichtung zwei endseitige Öffnungen der Kondensationskammer aufweist, die jeweils mit einem Deckel verschlossen sind, wobei das Hauptbauteil ein Strangprofil ist. Ein solcher Wärmeübertrager ist mit wenigen Bauteilen in großen Stückzahlen kostengünstig fertigbar. Insbesondere die Kammerdecke dient dabei in einer Einbaulage als geodätische Oberseite, auf welcher Schnee und Eis geschmolzen werden können. Bevorzugt sind daher die Seitenwandungen kürzer als die Kammerdecke und/oder der Kammerboden. So ergibt sich ein flacher Wärmeübertrager, der wenig Platz im Schotterbett beansprucht. Außerdem sollten die endseitigen Öffnungen parallel zueinander angeordnet sein. Die Anpassung an unterschiedliche Gleisschwellenabstände ist einfach durch Auslegung der Länge des Hauptbauteils definierbar. Damit kann die gesamte Fläche zwischen zwei Gleisschwellen oberhalb des Wärmeübertragers von Schnee und Eis befreit werden. Weiterhin ist der rohrförmig geschlossene Querschnitt geeignet dazu, hohe Betriebsdrücke aufnehmen zu können.

Ein solches Strangprofil ist kostengünstig in großen Stückzahlen herstellbar. Komplexe Querschnitte sind auf einfache Weise und ohne Nacharbeit zu fertigen. Außerdem ist die Länge des Wärmeübertragers durch unterschiedliches Ablängen des Strangprofils variabel, ohne dass zusätzliche Werkzeugkosten entstehen. Das Hauptbauteil kann dabei als Strangpressprofil oder Stranggussprofil ausgebildet sein. Diese Verfahren eignen sich auch besonders gut zur Verarbeitung von Materialien mit hoher Wärmeleitfähigkeit, welche sich zum Schmelzen von Schnee und Eis eignen. Zu bevorzugen sind insbesondere metallische Ausbildungen des Hauptbauteils und/oder der Deckel. Besonders zu bevorzugen sind hierbei Ausbildungen mit Kupfer oder Aluminium. Alternativ kann auch Eisen eingesetzt werden.

Gemäß einer Fortbildung der Erfindung ist wenigstens einer der Deckel wenigstens teilweise in die zu verschließende Öffnung eingesetzt. Durch ein Einsetzen ist eine korrekte Positionierung des Deckels zur Öffnung bewirkbar. Außerdem können äußere Kräfte vom Deckel in das Hauptbauteil weitergeleitet werden, ohne dass eine Einleitung der Kräfte zunächst in ein Befestigungsmittel erfolgen muss. Um diese Vorteile voll auszuschöpfen, sollte wenigstens einer der Deckel vollständig in die zugehörige Öffnung eingesetzt sein. Vorteilhaft ist hieran, dass das Hauptbauteil soweit wie möglich bis an eine Gleisschwelle herangeführt werden kann, wofür in Längsrichtung überstehende Deckel hinderlich wären. Entsprechend werden Schnee und Eis bis an die Schwelle heran effektiv geschmolzen.

Ausgebildet sein kann der Deckel als einfacher Flachkörper, ggf. mit umlaufender Fase, oder aber auch mit komplexerer Geometrie. Ist letzteres der Fall ist ein Gussdeckel zu bevorzugen. Durch eine komplexere Geometrie, können beispielsweise Zugstege in Ausnehmungen des Deckels hineinragen.

Zur Erzielung einer langlebigen und dichten Verbindung sollte wenigstens einer der Deckel mit dem Hauptbauteil verschweißt sein. Eine solche Verbindung ist auch dazu geeignet, hohen Betriebsdrücken in der Kondensationskammer standzuhalten, sowie die Kondensationskammer zu stabilisieren. Die den Deckel mit dem Hauptbauteil verbindende Schweißnaht sollte in Längsrichtung vorzugsweise nicht über das Hauptbauteil hinausstehen.

Weiterhin sieht eine Ausgestaltung der Erfindung vor, dass die Kammerdecke und der Kammerboden wenigstens durch ein Zugelement verbunden sind. Hierdurch können die Kammerdecke und/oder der Kammerboden aus dünnerem Material hergestellt werden, da das Zugelement durch die Aufnahme von Zugkräften ein Aufblähen der Kondensationskammer verhindert. Bevorzugt ist das Zugelement daher mittig, bzw. regelmäßig in der Kondensationskammer angeordnet. Hierfür sollte es dann freistehend, d.h. beabstandet zu den Seitenwandungen, in der Kondensationskammer angeordnet sein.

Für die produktionstechnische Umsetzung des Hauptbauteils als Strangprofil, ist das Zugelement bevorzugter Weise ein Zugsteg. Ein solcher kann über eine große Länge verteilt Zugkräfte aufnehmen. Im Strangprofil erstreckt sich der Zugsteg dann in Längsrichtung des Hauptbauteils. Entsprechend ist das Zugelement dann auch einteilig mit dem Hauptbauteil ausgebildet. Am Übergang zwischen dem Zugelement und der Kammerdecke und/oder dem Kammerboden sollten Kehlradien vorgesehen sein, um Spannungsspitzen und damit Materialbrüche zu vermeiden. Weiterhin bietet es sich aus gleichem Grunde an, die Zugelemente im Wesentlichen senkrecht zur Kammerdecke und/oder dem Kammerboden auszurichten. Dies ist insbesondere dann möglich, wenn die Kammerdecke und der Kammerboden im Wesentlichen parallel zueinander verlaufen.

Zur Ermöglichung einer frei ablaufenden Konvektionsströmung innerhalb der Konvektionskammer auch bei geringem Gefälle, sollte um jedes Zugelement ein Freiraum mit einem Mindestdurchmesser von wenigstens 6 mm ausgebildet sein, wobei der Mindestdurchmesser bevorzugt wenigstens 9 mm beträgt. Bei einem Strangprofil mit Zugstegen betrifft dies insbesondere den Abstand in Querrichtung. Ein solcher Abstand vereinfacht auch die Ausbildung von Werkzeugkernen für Strangguss- und Strangpressverfahren.

Gemäß einer Fortentwicklung der Erfindung, ist wenigstens eine Querbohrung durch eine der Seitenwandungen und die Zugstege eingebracht, um die Kammerbereiche zwischen den Zugelementen miteinander strömungstechnisch zu verbinden. Das Loch in der Seitenwandung ist dann mit einem Gewindestopfen oder einer Dichtschraube alternativ auch durch Schweißen verschließbar.

Ferner sieht eine nähere Ausgestaltung der Erfindung vor, dass das Zugelement in Längsrichtung beabstandet zu wenigstens einer der Öffnungen endet. Bei einer Ausbildung des Hauptbauteils als Strangprofil bietet es sich an, die Zugstege nachträglich zu kürzen, insbesondere durch ein spanendes Verfahren. Dies erlaubt zum einen eine Ausbildung derart, dass eine Strömungsverbindung für ein Wärmeträgermedium zwischen dem Zugelement und dem Deckel verbleibt. Zum anderen kann der Deckel in die endseitige Öffnung des Hauptbauteils eingesetzt werden. Bei entsprechender Formgebung kann der Deckel zudem auf das Zugelement aufgesetzt werden, so dass er klar in der Öffnung positioniert ist. Wenn der Zugsteg beispielsweise stirnseitig konkav ausgebildet ist und randseitige Auflageflächen für den Deckel ausbildet, verbleibt trotz Auflegen des Deckels eine Strömungsverbindung zwischen Deckel und Zugsteg.

Von einer Weiterentwicklung der Erfindung wird vorgeschlagen, dass das Hauptbauteil in Richtung der Außenseite des Kammerbodens wenigstens eine in Längsrichtung rohrförmig verlaufende Hohlkammer aufweist. Eine solche Hohlkammer ist dazu geeignet, eine thermische Isolation auszubilden. Bevorzugt ist der Hohlraum daher in Längsrichtung von Abdeckelementen abgedeckt, und besonders bevorzugt dicht verschlossen. Ein Verlust von Wärmeenergie durch den Kammerboden wird damit verringert. Zur thermischen Isolation kann an der Unterseite des Hauptbauteils auch oder zusätzlich eine thermische Isolierung angeordnet werden, die beispielsweise aus einem Schaum besteht. Zum Schutz vor Nagern kann ein solcher Schaum mit einer Abdeckplatte abgedeckt sein.

Außerdem kann mit einer Hohlkammer ein stabilisierendes Kammerprofil ausgebildet sein. Hohe Betriebsdrücke in der Kondensationskammer werden so ermöglicht. Außerdem kann die Kondensationskammer durch äußere Einflüsse, z.B. vor spitzen Steinen unterhalb des Wärmeübertragers geschützt werden. Schließlich eignen sich Hohlkammern dazu, mit verhältnismäßig wenig zusätzlichem Material die Bauhöhe des Wärmeübertragers zu erhöhen, um so stabile Koppelmittel an dem Hauptbauteil ausbilden zu können.

Hierfür zeigt eine Variante der Erfindung auf, dass das Hauptbauteil in Querrichtung auf Seiten der ersten Seitenwandung ein Koppelmittel mit einer längsgerichteten Drehachse aufweist. Dieses vorteilhafte Koppelmittel erlaubt es, den Wärmeübertrager unterschiedlich schräg auszurichten. Je nachdem wie groß beispielsweise der Abstand einer Weichenzunge zu dem Schienensteg ist, müssen in der Praxis unterschiedlich breite Zwischenräume eisbefreit werden. Durch eine steilere Anstellung des Wärmeübertragers, lässt sich die beheizte Oberfläche auf ein Minimum reduzieren. Gleichzeitig bleibt ein großer Bereich des Schotterbetts für Verdichtungsarbeiten frei zugänglich. Der Wärmeübertrager wird bevorzugt so angestellt, dass er in einer Offenstellung der Weichenzunge unter dieser endet. Die Drehachse sollte hierbei benachbart sowie im Wesentlichen parallel zum Schienensteg/-fuß verlaufen.

Durch das Vorsehen eines solchen Koppelmittels kann der Wärmeübertrager stets die gleiche Querschnittsgeometrie haben. Die Anbindung des Wärmeübertragers an einen Schienensteg kann nämlich von einem korrespondierenden Koppelmittel vorgenommen werden, welches durch unterschiedliche Anbindungsgeometrien, insbesondere Schienenfußaufnahmegeometrien (z.B. für Gleisschwellenprofile vom Typ S49, S54, UIC60, SBB I, SBB IV, SBB VI), individuell gestaltbar ist. Durch die Drehachse ist zudem keine Diversifikation des korrespondierenden Koppelmittels und/oder des Wärmeübertragers für verschiedene Anstellwinkel des Wärmeübertragers notwendig, denn der notwendige Anstellwinkel ist einfach durch die Drehachse einstellbar. Dies bringt erhebliche Kostenvorteile.

Man erkennt, dass bei einem Vorsehen von Zugstegen, diese parallel zur Drehachse verlaufen. Damit verlaufen die zwischen den Zugstegen ausgebildeten Teilkammern auch im Wesentlichen parallel zur Drehachse. Bei horizontaler Betriebslage der Drehachse bedeutet dies, dass die selbstständige Konvektion im Wärmeübertrager teilweise im Wesentlichen horizontal ablaufen muss. Dies gelingt durch die Beabstandung der Zugstege mit einem Mindestabstand von 6 mm, besonders bevorzugt wenigstens 9 mm. Außerdem sind entweder endseitig der Zugstege Strömungsverbindungen zwischen den Kammerbereichen ausgebildet oder/aber diese werden durch wenigstens eine Querbohrung durch die Zugstege bereitgestellt. Von den geneigten Strömungsverbindungen wird die Konvektion in die horizontalen Bereiche zwischen den Zugstegen aufgefächert.

Zur Ermöglichung einer natürlichen Konvektion mit Kondensatrückfluss eines Wärmeträgermediums in der Kondensationskammer, sollte die Anschlussöffnung wenigstens teilweise durch den Kammerboden und/oder wenigstens teilweise durch die zweite Seitenwandung in die Kondensationskammer münden. In der Betriebslage ist der Kammerboden dann so auszurichten, dass er in Richtung der Anschlussöffnung abfällt. Die Drehachse verläuft bevorzugt parallel zu einem Schienensteg.

In einer detaillierten Fortentwicklung ist vorgeschlagen, dass das Koppelmittel in einer entlang der Längsrichtung geöffneten Koppelöffnung des Hauptbauteils angeordnet ist, wobei eine Oberwandung der Koppelöffnung näher an der Kammerdecke angeordnet ist als eine Unterwandung der Koppelöffnung. Solch eine Koppelöffnung erlaubt es, den Wärmeübertrager, insbesondere mit der Oberwandung, bis in den Bereich oberhalb des Schienenfußes an den Schienensteg heranzuführen. Hier kommt auch die Weichenzunge oftmals zum Anliegen am Schienensteg und entsprechend muss dieser Bereich eisfrei gehalten werden.

Zur Optimierung des Wärmeflusses schlägt eine spezielle Ausgestaltung vor, dass die Oberwandung der Koppelöffnung innenseitig einen wenigstens abschnittsweise kreisförmig-konkaven Querschnitt mit einem Radius um die Drehachse des Koppelmittels hat. Ein um die Drehachse gelagertes korrespondierendes Koppelmittel kann so entlang der abschnittsweise kreisförmig-konkaven Innenseite entlang geführt werden. Es entsteht somit ein Wärmefluss vom Wärmeübertrager auf das vorzugsweise drehfest gelagerte korrespondierende Koppelmittel. Das korrespondierende Koppelmittel ist unabhängig von dem Winkel des Wärmeübertragers zum Schienensteg positionierbar und eine optimale Anbindung des Wärmeübertragers an den Schienensteg gelingt. Um einen möglichst bündigen Übergang an der Oberfläche zu schaffen, ist es vorteilhaft, die Oberwandung der Koppelöffnung außenseitig als einen konvexen Fortsatz der Kammerdecke auszubilden.

Damit eine große Wärmeübertragungsfläche zwischen dem Wärmeübertrager und dem korrespondierenden Koppelmittel bereitstellbar ist, wird eine Variante vorgeschlagen, bei der das Koppelmittel, insbesondere dessen Drehachse, im Bereich der Unterwandung der Koppelöffnung angeordnet ist.

Entsprechend einer speziellen Gestaltung, ist das Koppelmittel eine im Querschnitt teilkreisförmige Ausnehmung mit einem Radius um die Drehachse, wobei die Ausnehmung auf der Innenseite der Koppelöffnung offen ausgebildet ist. Mithin kann sich ein korrespondierendes Koppelmittel über die gesamte Längserstreckung des Hauptbauteils erstrecken, da dann eine Rippe des Koppelmittels innerhalb der Öffnung der Ausnehmung hin und her schwenkbar ist. Entsprechend stabil ist die Koppelverbindung und der Wärmetransfer vom Wärmeübertrager auf das Koppelmittel findet optimal statt.

Der Teilkreis der Ausnehmung des Koppelmittels sollte um mehr als 180 Grad, bevorzugt um mehr als 200 Grad, geschlossen ausgebildet sein. Damit ist das korrespondierende Koppelmittel in der Ausnehmung festlegbar. Letzteres sollte hierfür in Längsrichtung in die Ausnehmung eingeschoben werden. Eine Demontage der Kopplung zwischen den Gleisschwellen ist dann nicht möglich, und der Wärmeübertrager durch das Festlegen des korrespondierenden Koppelmittels am Gleis sicher positioniert.

Außerdem wird der Radius der Innenseite der Oberwandung der Koppelöffnung bevorzugt größer als der Radius der Ausnehmung gewählt, insbesondere um wenigstens das 2-fache und höchstens das 10-fache, und besonders bevorzugt um das 5-fache bis 7-fache. Auf diese Weise ist eine große Wärmeübertragungsfläche zwischen Wärmeübertrager und korrespondierendem Koppelmittel bei kompakter Baugröße erzielbar.

Zur Stabilisierung der Koppelöffnung ist es günstig, wenn wenigstens eine der Hohlkammern an die Unterwandung der Koppelöffnung angrenzt. Mithin ist es möglich, den Wärmeübertrager im Querschnitt auf Seiten der Koppelöffnung mit einer größeren Bauhöhe auszulegen als auf Seiten der zweiten Seitenwandung. Eine im Querschnitt keilförmige Aufweitung in Richtung der Koppelöffnung bietet sich an.

Gemäß einer Ergänzung der Erfindung ist beabstandet zum Koppelmittel ein zweites Koppelmittel vom Hauptbauteil zur Ankopplung eines Stellmittels ausgebildet. Dadurch ist die Drehposition des Wärmeübertragers um die Drehachse mit einem Stellmittel festleg- und fixierbar. Vorzugsweise ist das zweite Koppelmittel eine im Querschnitt wenigstens teilkreisförmige Ausnehmung. Durch eine Teilkreisform ist die Ausnehmung ohne zusätzlichen Werkzeugkern im Strangpress- oder Stranggussverfahren herstellbar, wodurch die Werkzeugkosten gering sind. Der notwendige Kernabschnitt kann nämlich an einem anderen Kern mit ausgebildet sein. Die Teilkreisöffnung sollte um mehr als 180 Grad, bevorzugt um mehr als 200 Grad, geschlossen ausgebildet werden, um eine Drehachse oder eine Schraube fest aufnehmen zu können. Für letztere ist durch Nacharbeit ein Gewinde in die Ausnehmung einzuschneiden. Die teilkreisförmige Ausnehmung sollte in Richtung Außenseite, insbesondere Unterseite des Wärmeübertragers, oder aber in Richtung einer Hohlkammer längsgeschlitzt sein.

In einer bevorzugten Ausführungsform sind zwei solcher Ausnehmungen beabstandet zueinander vorgesehen. Mit in diese Ausnehmungen eingeschraubten Schrauben werden Endbleche mit im Wesentlichen der Kontur des Wärmeübertragerquerschnitts auf die Endseiten des Wärmeübertragers aufgeschraubt. An den Endblechen wiederum sind die eigentlichen Stellmittel ausgebildet, bspw. in Form von Stecklöchern. Gleichzeitig bilden die Endbleche Abdeckelemente für die Hohlkammern aus.

Weiterhin betrifft die Erfindung eine Wärmeübertragervorrichtung mit einem wie zuvor beschriebenen Wärmeübertrager, wobei das Hauptbauteil in Querrichtung auf Seiten der ersten Seitenwandung ein Koppelmittel mit einer längsgerichteten Drehachse aufweist, und wobei das Koppelmittel an einem korrespondierenden Koppelmittel um die Drehachse wenigstens beschränkt drehbar gelagert ist. Eine solche Wärmeübertragervorrichtung ist somit dazu geeignet, durch unterschiedliche Drehwinkel des Wärmeübertragers zum korrespondierenden Koppelmittel, an unterschiedliche horizontale Beheizungsbreiten angepasst zu werden. Hierfür ist die Drehachse horizontal auszurichten. Ist die Beheizungsbreite schmal, wird ein steilerer Winkel gewählt als bei einer größeren Beheizungsbreite. Ein Schotterbett zwischen zwei Gleisschwellen kann so möglichst frei zugänglich für Verdichtungswerkzeuge gehalten werden.

In einer Weiterentwicklung der erfindungsgemäßen Wärmeübertragervorrichtung ist beabstandet zum Koppelmittel ein zweites Koppelmittel vom Hauptbauteil mit einem Stellmittel zum Drehen und Festlegen des Wärmeübertragers um die Drehachse gekoppelt. Das Stellmittel ist geeignet dazu, die Drehbewegung des Wärmeübertragers um die Drehachse zu blockieren, insbesondere in wenigstens einer Drehstellung. Der Wärmeübertrager ist dann in seiner Betriebslage fixiert.

Von einer anderen Fortbildung der erfindungsgemäßen Wärmeübertragervorrichtung ist vorgeschlagen, dass das Koppelmittel in einer entlang der Längsrichtung offenen Koppelöffnung des Hauptbauteils angeordnet ist, wobei eine Oberwandung der Koppelöffnung näher an der Kammerdecke angeordnet ist als eine Unterwandung der Koppelöffnung, und wobei das korrespondierende Koppelmittel Teil eines Profilkörpers ist, der drehbar um die Drehachse wenigstens teilweise in der Koppelöffnung gelagert ist. Ein solcher Profilkörper ist in großen Stückzahlen kostengünstig herstellbar, insbesondere als Strangprofil. Dieses kann gepresst oder gegossen sein. Als Materialien eignen sich insbesondere Materialien mit hoher Wärmeleitfähigkeit wie Metalle. Aluminium und Kupfer sind zu bevorzugen. Eisen stellt eine Alternative dar. Es ergibt sich so eine stabile und belastbare Kopplung des Profilkörpers mit dem Wärmeübertrager, die sich in Längsrichtung über die gesamte Breite des Wärmeübertragers erstrecken kann.

Das Koppelmittel des Profilkörpers ist bevorzugt mit kreisrundem Querschnitt ausgebildet. Um eine Längsverschiebung zwischen dem Profilkörper und dem Wärmeübertrager zu blockieren, bietet es sich an, eine im Querschnitt kreisförmige Ausnehmung in dem Koppelmittel vorzusehen. In diese kann dann ein Gewinde eingeschnitten werden und eine Schraube mit einer Unterlegscheibe aufgeschraubt werden, wobei der Durchmesser der Unterlegscheibe größer ist als der Durchmesser des Koppelmittels. Fertigungstechnisch ist es günstig, die kreisförmige Ausnehmung mit einem Längsschlitz im Koppelmittel auszubilden. Hierdurch ist ein separater Werkzeugkern für die Ausnehmung entbehrlich.

In einer näheren Ausgestaltung ist dabei vorgesehen, dass die Oberwandung der Koppelöffnung innenseitig einen wenigstens abschnittsweise kreisförmig-konkaven Querschnitt mit einem Radius um die Drehachse des Koppelmittels hat, wobei der Profilkörper eine der Innenseite der Oberwandung gegenüberliegenden konvexen Wandabschnitt aufweist, der im Wesentlichen den gleichen Radius um die Drehachse aufweist. Damit ist eine große Wärmeübertragungsfläche zwischen dem Wärmeübertrager und dem korrespondierenden Profilkörper bereitstellbar. Entsprechend sollte der abschnittsweise kreisförmig-konkave Querschnitt der Koppelmittelöffnung des Wärmeübertragers den gegenüberliegenden konvexen Wandabschnitt des Profilkörpers berühren, und so insbesondere eine Wärmebrücke ausbilden. Trotz der so geschaffenen großen Wärmeübertragungsfläche mit großem Radius bleibt die Wärmeübertragervorrichtung kompakt.

Zur optimalen Anbindung der erfindungsgemäßen Wärmeübertragervorrichtung an einen Schienensteg erweist es sich von Vorteil, den Profilkörper mit einer Schienenfußaufnahme auszubilden. Diese ragt bevorzugt zwischen das Koppelmittel und den konvexen Wandabschnitt. Damit ist die Wärmeübertragervorrichtung unmittelbar am Schienensteg festlegbar. Es ergibt sich eine klare Positionierung sowie eine thermische Kopplung mit dem Schienensteg, der folglich zum Schmelzen von Schnee und Eis miterwärmbar ist.

Die Erfindung betrifft ferner eine Schienenheizeinrichtung mit wenigstens einer wie zuvor beschriebenen Wärmeübertragervorrichtung, wobei die Anschlussöffnung hydraulisch mit einem Erdwärmerohr verbunden ist, und wobei der Wärmeübertrager in einem Schwellenfach zwischen zwei Gleisschwellen angeordnet und die Drehachse benachbart und im Wesentlichen parallel zu einem Schienensteg ausgerichtet ist. In einer solchen Einbaulage am Gleis sind die Vorteile des erfindungsgemäßen Wärmeübertragers und der Wärmeübertragervorrichtung realisiert. Durch Einstellen des Winkels des Wärmeübertragers um die Drehachse, kann dieser an die Größe der zu beheizenden Oberfläche angepasst werden. Die Anordnung ist zudem preiswert und in großen Stückzahlen herstellbar, da nur wenige Werkzeug und Wärmeübertragergrößen für eine Vielzahl unterschiedlicher Einbaulagen notwendig sind.

Das korrespondierende Koppelmittel sollte an wenigstens einer der Gleisschwellen gelagert, insbesondere befestigt sein. Hierfür eignet sich beispielsweise ein manschettenartiger Überwurf über eine Gleisschwelle. An wenigstens einer der beiden Manschettenseiten sollte dann ein Aufnahmemittel für das korrespondierende Koppelmittel vorgesehen sein. Sofern das korrespondierende Koppelmittel eine Schienenfußaufnahme aufweist, kann der Schienenfuß des Schienenstegs wenigstens teilweise in der Schienenfußaufnahme des Profilkörpers aufgenommen sein. Das Koppelmittel wird dann zur Montage auf den Schienenfuß aufgesteckt. Je nach Gleisprofiltyp kann die Schienenfußaufnahme individuell ausgestaltet sein und bildet so stets einen passenden Adapter für den Wärmeübertrager und den Schienenfuß. Entsprechend stabil ist die Lagerung des Wärmeübertragers. Außerdem ist ein Wärmetransfer bis in den Schienenfuß hinein möglich, sodass Schnee und Eis zuverlässig geschmolzen werden. Zur Verbesserung des Wärmeflusses kann zusätzlich eine Warmleitpaste in der Kontaktzone vorgesehen sein.

Die notwendige und durch Erdwärme bereitzustellende Wärmeenergie kann somit gering ausgelegt werden, da keine Strahlungswärme zum Abtauen beabstandet liegender Eisansammlungen erforderlich ist. Mithin wird ein Großteil der aus dem Erdreich nach oben geleiteten Wärme zum Schmelzen von Eis und Schnee eingesetzt.

Zur Inbetriebnahme sollten die Kondensationskammer und das Erdwärmerohr mit einem Wärmeträgermedium gefüllt sein. Als besonders praxistauglich aufgrund der geforderten Temperaturen und der geforderten Umweltverträglichkeit hat sich als Wärmeträgermedium Kohlendioxid (CO2) erwiesen. Um einen Phasenwechsel des Wärmeträgermediums innerhalb der Schienenheizeinrichtung zu erreichen, insbesondere bei der Verwendung von Kohlendioxid, ist ein hoher Betriebsdruck notwendig, welcher ungefähr 45 bar beträgt.

Durch das Einbringen des Wärmeträgermediums in flüssiger Phase in das Erdwärmerohr ist letzteres geodätisch von unten nach oben in einen unten angeordneten Sammelbereich, einen sich geodätisch darüber anschließenden Verdampferbereich, sowie einen geodätisch darüber anschließenden Transportabschnitt einteilbar. Die geodätischen Höhen der Grenzen zwischen dem Sammelbereich, dem Verdampferbereich und dem Transportbereich sind dabei abhängig von den Umgebungstemperaturen und damit verbunden den anteiligen Aggregatzuständen des Wärmeträgermediums. Zur Vermeidung von Wärmeverlusten sollte wenigstens ein Teilabschnitt des Transportabschnitts eine thermische Isolierung aufweisen.

Das Wärmeträgermedium wird dann im Verdampferbereich des Erdwärmerohrs durch Erwärmung verdampft. Anschließend steigt es über den Transportabschnitt bis in die Kondensationskammer. Bei geringer Temperatur der Kammerwandungen kondensiert das Wärmeträgermedium anschließend. Hierbei gibt es Wärme an den Wärmeübertrager ab. Das Temperaturniveau des Wärmeübertragers ist dabei ausreichend hoch, um Schnee und Eis schmelzen zu können, nicht jedoch so hoch, dass eine große Abstrahlungswärme entsteht.

Ein weiterer Vorteil der erfindungsgemäßen Schienenheizeinrichtung liegt darin, dass die Zirkulation des Wärmeträgermediums selbstständig ablaufen kann. Um den Rückfluss von Kondensat aus dem Wärmeübertrager zurück zum Erdwärmerohr zu ermöglichen, sollte in der Einbausituation an der Schiene oder Weiche allerdings ein durchgehendes Gefälle vom Kammerboden bis zum Erdwärmerohr ausgebildet sein. Mithin ist keine energetisch betriebene Pumpe notwendig. Vielmehr führt die Temperaturdifferenz zwischen der Umgebung des Verdampferbereichs und des Wärmeübertragers zu Konvektionsströmen und Phasenwechseln des Wärmeträgermediums. Vorteilhaft ist auch, dass eine Zirkulation des Wärmeträgermediums nur dann einsetzt, wenn die Temperatur des Wärmeübertragers geringer ist als die Erdwärmetemperatur. Nur in diesem Falle ist der Wärmeübertrager als Kondensator aktiv und nur dann wird der Erde Wärme entzogen und an die Umgebung abgegeben.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Wärmeübertrager in perspektivischer Ansicht;
- Fig. 2: eine perspektivische Teilansicht eines Hauptbauteils eines Wärmeübertragers im Profil;
- Fig. 3: eine Profilansicht eines Hauptbauteils eines Wärmeübertragers;
- Fig. 4: eine perspektivische Ansicht eines Deckels zur Abdeckung einer endseitigen Öffnung eines Hauptbauteils;
- Fig. 5: eine perspektivische Teilansicht eines Profilkörpers mit einem Koppelmittel im Profil;
- Fig. 6: einen Querschnitt durch einen Profilkörper und einen Wärmeübertrager, die über ihre Koppelmittel drehbar um eine Drehachse aneinander gelagert sind;
- Fig. 7: die in Fig. 6 gezeigte Anordnung in anderem Drehwinkel; und
- Fig. 8: eine Schienenheizeinrichtung in einer möglichen Einbaulage an einer Weiche.

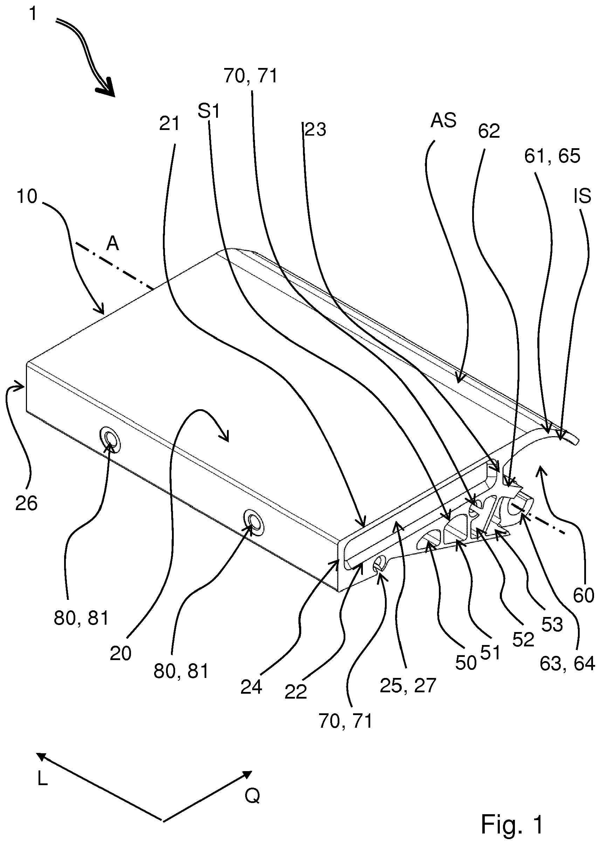

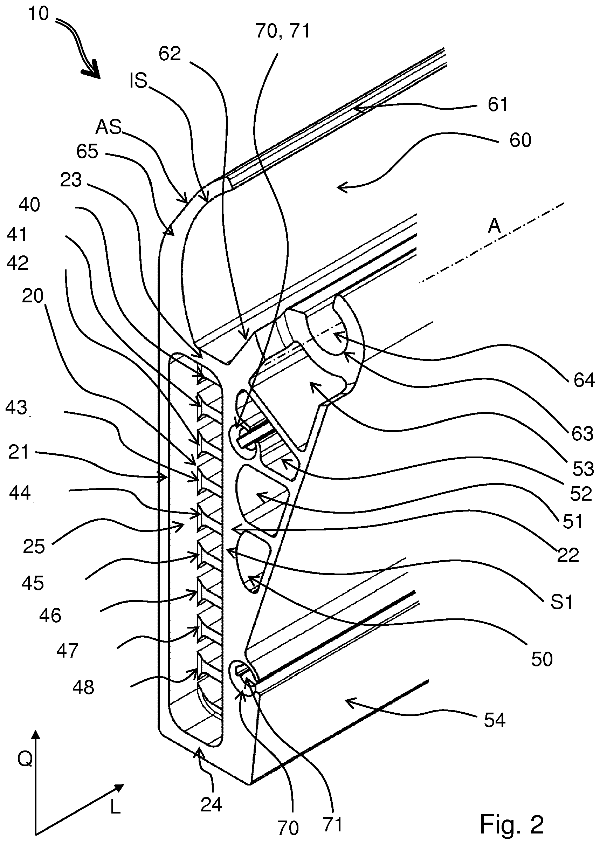

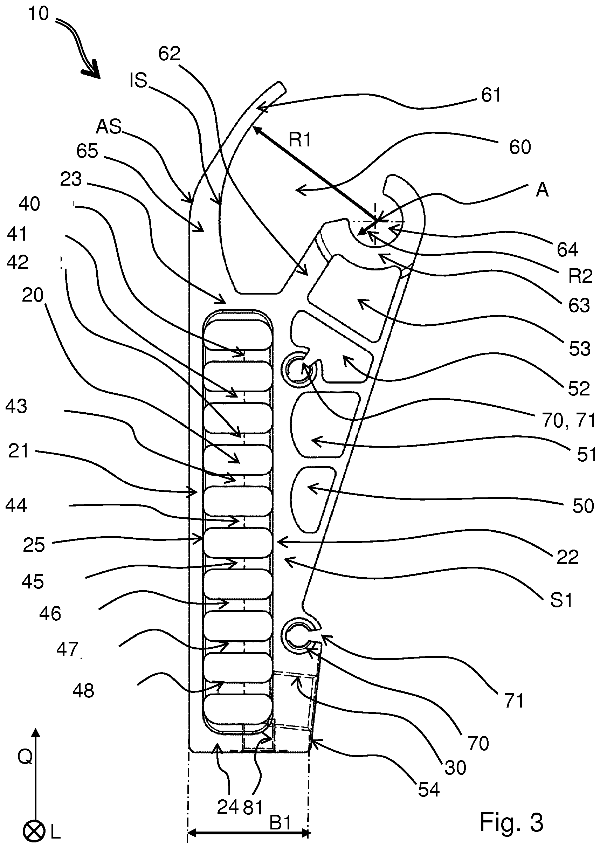

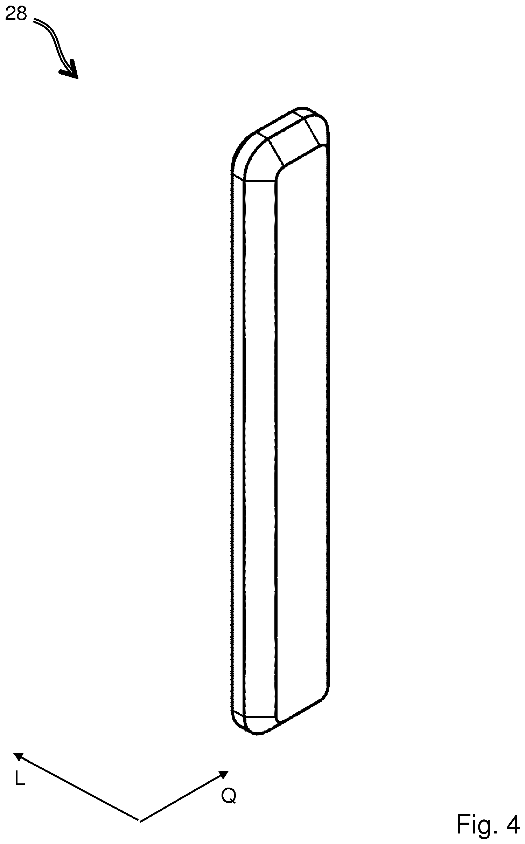

**Fig. 1** zeigt einen Wärmeübertrager 1 bestehend aus einem Hauptbauteil 10, wie es in den **Fig. 2** **und** **3** detailliert dargestellt ist und zwei Deckeln 27, 28, wovon ein Deckel 28 exemplarisch in **Fig. 4** abgebildet ist.

Der Wärmeübertrager 1 gemäß Fig. 1 hat eine im Inneren verborgene Kondensationskammer 20 (vgl. hierzu Fig. 2 und 3), in die eine Anschlussöffnung 30 (siehe hierzu Fig. 3) zur Verbindung mit einem Erdwärmerohr mündet. Die Kondensationskammer 20 ist wie in den Fig. 2 und 3 erkennbar, längsgerichtet L rohrförmig von dem Hauptbauteil 10 radial eingefasst, welches als Strangprofil ausgebildet ist. Im Querschnitt Q erkennt man eine rechteckige Grundform der Kondensationskammer 20 mit einer Kammerdecke 21, einem gegenüberliegenden parallelen Kammerboden 22 und zwei sich gegenüberliegenden sowie die Kammerdecke 21 und den Kammerboden 22 verbindenden Seitenwandungen 23, 24. Die Seitenwandungen 23, 24 sind kürzer als die Kammerdecke 21 und der Kammerboden 22, insbesondere circa um den Faktor 6. Die Anschlussöffnung 30 mündet - wie man in Fig. 3 sieht - durch den Kammerboden 22 in die Kondensationskammer 20. Sie ist zudem benachbart zur zweiten Seitenwandung 24, insbesondere grenzt sie an die zweite Seitenwandung 24 an.

In Längsrichtung L weist das Hauptbauteil 10 gemäß Fig. 1 zwei endseitige Öffnungen 25, 26 der Kondensationskammer 20 auf. Diese sind parallel zueinander und entsprechen einer geraden Ablängung eines Profilstrangs. In den Fig. 2 und 3 sieht man durch die Öffnung 25, dass die Kammerdecke 21 und der Kammerboden 22 durch neun Zugelemente 40, 41, 42, 43, 44, 45, 46, 47, 48 verbunden sind, insbesondere durch neun Zugstege. Die Zugelemente 40, 41, 42, 43, 44, 45, 46, 47, 48 sind einteilig mit dem Hauptbauteil 10 ausgebildet und daher Teil des Strangprofils. Am Übergang zwischen den Zugelementen 40, 41, 42, 43, 44, 45, 46, 47, 48 sowie der Kammerdecke 21 und dem Kammerboden 22 sind jeweils Kehlradien vorgesehen. Außerdem sind die Zugelemente 40, 41, 42, 43, 44, 45, 46, 47, 48 senkrecht zur Kammerdecke 21 und dem Kammerboden 22 ausgerichtet, wofür letztere parallel zueinander verlaufen.

Alle Zugelemente 40, 41, 42, 43, 44, 45, 46, 47, 48 enden in Fig. 2 jeweils in Längsrichtung L beabstandet zur Öffnung 25. Hierfür sind die Zugelement 40, 41, 42, 43, 44, 45, 46, 47, 48 durch mechanische Nacharbeit gekürzt, insbesondere mit einem Fräswerkzeug, das in die Öffnung 25 eingeführt wurde.

In Fig. 1 ist die Öffnung 25 mit einem Deckel 27 verschlossen. Der die verdeckte, rückseitige Öffnung 26 verschließende und ebenfalls nicht sichtbare Deckel 28 ist in Fig. 4 näher dargestellt. Man erkennt hier, dass der Deckel 28 aus einem einfachen Flachkörper besteht. Außerdem besitzt der Deckel 28 eine umlaufende Fase. Diese dient einer Schweißnaht zwischen dem Deckel 28 und einem Hauptbauteil als Bett. Die Schweißnaht ist hierdurch besonders stabil. Der in Fig. 1 sichtbare Deckel 27 ist baugleich ausgeführt. In Fig. 1 sieht man, dass sowohl der Deckel 27 als auch die fixierende Schweißnaht vollständig in die zu verschließende Öffnung 25 eingelassen sind und mithin in Längsrichtung L nicht über das Hauptbauteil 10 hinausstehen.

Weiterhin sind auf Seiten der zweiten Seitenwandung 24 zwei Verschlusselemente 80, insbesondere Verschlussschrauben zu sehen. Diese sind dichtend in Querbohrungen 81 in der zweiten Seitenwandung 24 eingesetzt, wobei die Querbohrungen 81 -wie in Fig. 3 gestrichelt angedeutet - auch durch die Zugelemente 40, 41, 42, 43, 44, 45, 46, 47, 48 hindurchführen.

Das Hauptbauteil 10 weist gemäß der Fig. 1 bis 3 in Querrichtung Q auf Seiten der ersten Seitenwandung 23 ein Koppelmittel 63 mit einer längsgerichteten L Drehachse A auf. Dabei ist das Koppelmittel 63 in einer entlang der Längsrichtung L offenen Koppelöffnung 60 des Hauptbauteils 10 angeordnet. Eine Oberwandung 61 der Koppelöffnung 60 liegt näher an der Kammerdecke 21 als eine Unterwandung 62 der Koppelöffnung 60. Die Oberwandung 61 hat innenseitig IS einen wenigstens abschnittsweise kreisförmig-konkaven Querschnitt mit einem Radius R1 (siehe hierzu Fig. 3) um die Drehachse A des Koppelmittels 63. Außerdem bildet die Oberwandung 61 außenseitig AS einen konvexen Fortsatz 65 der Kammerdecke 21.

Weiterhin ist das Koppelmittel 63 auf Seiten der Unterwandung 62 der Koppelöffnung 60 platziert. Man erkennt, dass das Koppelmittel 63 eine im Querschnitt Q teilkreisförmige Ausnehmung 64 mit einem Radius R2 (siehe hierzu Fig. 3) um die Drehachse A ist. Der Radius R2 der Ausnehmung 64 ist gemäß Fig. 3 circa um den Faktor 6 kleiner als der Radius R1 der Innenseite IS der Oberwandung 61. Nach den Fig. 1 bis 3 ist die Ausnehmung 64 auf der Innenseite IS der Koppelöffnung 60 offen. Der Teilkreis der Ausnehmung 64 ist jedoch um mehr als 180 Grad, insbesondere um circa 210 Grad, geschlossen ausgebildet, sodass eine Achse sicher umgreifbar ist.

Ferner weist das Hauptbauteil 10 in Richtung der Außenseite S1 des Kammerbodens 22 rohrförmig in Längsrichtung L verlaufende Hohlkammern 50, 51, 52, 53 auf, insbesondere vier von diesen. Eine der Hohlkammern 53 grenzt dabei an die Unterwandung 62 der Koppelöffnung 60 an. Die Hohlkammern 50, 51, 52, 53 bilden so ein stabilisierendes Kammerprofil für die Kondensationskammer 20 und die Koppelöffnung 60 aus. Gleichzeitig dienen die Hohlkammern 50, 51, 52, 53 als thermische Isolation für die Kondensationskammer 20. Durch die Dimensionierung der Hohlkammern 50, 51, 52, 53 und der Koppelöffnung 60 hat der Wärmeübertrager 1 im Querschnitt Q auf Seiten der Koppelöffnung 60 eine größere Bauhöhe B1 (siehe hierzu Fig. 3) als auf Seiten der zweiten Seitenwandung 24. Insbesondere ist er im Querschnitt Q in Richtung der Koppelöffnung 60 keilförmig aufweitend ausgebildet.

Beabstandet zum Koppelmittel 63 sind vom Hauptbauteil 10 zwei weitere Koppelmittel 70 in Form zweier teilkreisförmiger Ausnehmungen 71 ausgebildet, die der Ankopplung eines Stellmittels dienen. Die teilkreisförmigen Ausnehmungen 71 sind beide in Längsrichtung L geschlitzt, sodass bei der Herstellung des Hauptbauteils 10 keine separaten Werkzeugkerne für diese vorzusehen sind. Der Längsschlitz einer der Ausnehmungen 71 weist in Richtung Unterseite des Wärmeübertragers 1 und ein weiterer in das Innere einer Hohlkammer 52. Zur Festlegung von Endplatten mittels Schrauben an dem Hauptbauteil 10, sind Innengewinde in die Ausnehmungen 71 eingeschnitten.

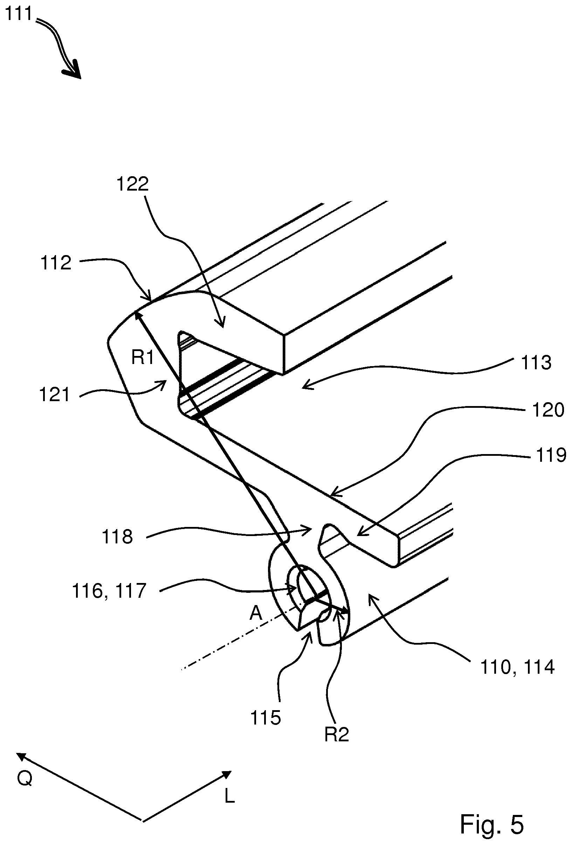

**Fig. 5** zeigt eine perspektivische Teilansicht eines Profilkörpers 111 mit einem Koppelmittel 110 im Profil. Letzteres ist geeignet, um mit einem Koppelmittel 63 eines Wärmeübertragers 1 gemäß den Fig. 1 bis 3 gekoppelt zu werden. Der Profilkörper 111 ist als Strangprofil ausgebildet.

Das Koppelmittel 110 des Profilkörpers 111 hat einen kreisrunden Querschnitt mit einem Radius R2 um eine Drehachse A. Um eine Längsverschiebung zwischen dem Profilkörper 111 und dem später anzukoppelnden Wärmeübertrager 1 zu blockieren, ist eine im Querschnitt kreisförmige Ausnehmung 116 im Zentrum des Koppelmittels 110 eingebracht. In diese ist ein Gewinde 117 eingeschnitten. Zur Erzielung geringer Werkzeugkosten, ist die kreisförmige Ausnehmung 116 mit einem Längsschlitz 115 durch das Koppelmittel 110 ausgeführt.

Dem Längsschlitz 115 gegenüberliegend schließt sich über einen längsgerichteten Steg 118 des Profilkörpers 111 eine Schienenfußaufnahme 113 an das Koppelmittel 110 an. Die Schienenfußaufnahme 113 hat im Querschnitt eine J-Form, welche in der gezeigten Einbaulage um 90 Grad im Uhrzeigersinn gedreht ist. An dem langen Schenkel 119 der J-Form ist außenseitig das Koppelmittel 110 über den Steg 118 angebunden. Innenseitig bildet der lange Schenkel 119 eine Anschlagfläche 120 für die Unterseite eines Schienenfußes aus. Der Mittelabschnitt 121 der J-Form überbrückt die vertikale Höhe des Schienenfußes und der kurze Schenkel 122 der J-Form übergreift schließlich den Schienenfuß oberseitig.

Man erkennt weiterhin, dass der Profilkörper 111 einen konvexen Wandabschnitt 112 hat, der einen Radius R1 um die Drehachse A aufweist. Dieser erstreckt sich außenseitig zum Mittelabschnitt 121 und zum kurzen Schenkel 122 der J-Form. Mithin liegt die Schienenfußaufnahme 113 im Wesentlichen zwischen dem Koppelmittel 110 und dem konvexen Wandabschnitt 112.

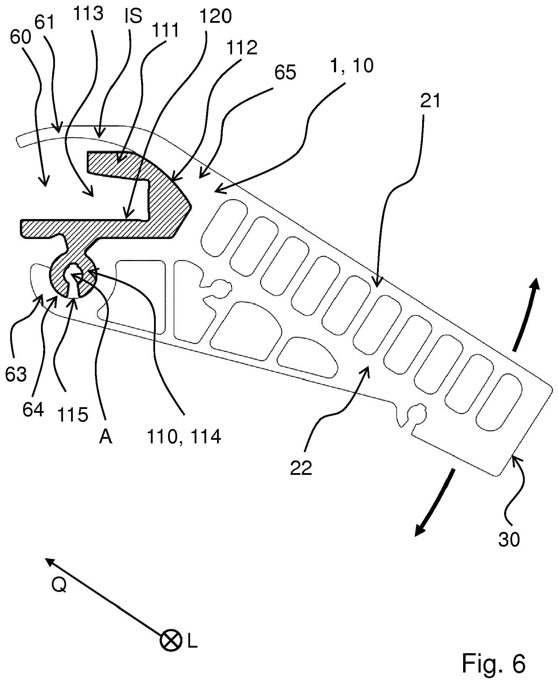

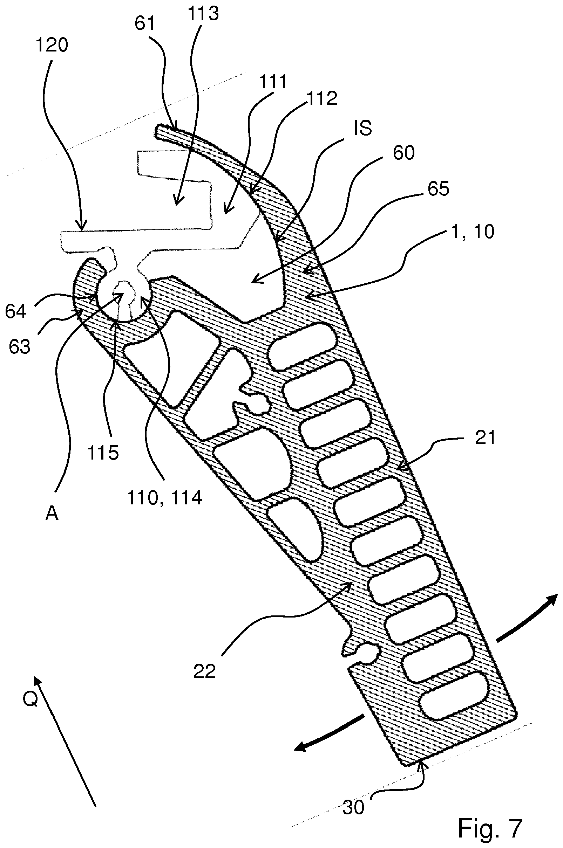

Die **Fig. 6** **und** **7** zeigen jeweils einen Querschnitt durch einen Profilkörper 111, wie er in Fig. 5 dargestellt ist, und einen Wärmeübertrager 1, wie er in den Fig. 1 bis 3 dargestellt ist. Diese sind über ihre Koppelmittel 63, 110 drehbar um eine Drehachse A aneinander gelagert. Der Unterschied der Fig. 6 zur Fig. 7 liegt darin, dass der Wärmeübertrager 1 in Fig. 7 steiler angestellt ist als in Fig. 6. Der invertierten Schraffur in den Fig. 6 und 7 kommt hier keine Bedeutung zu. Aufgrund der Übersichtlichkeit wurde auf die Aufführung eines Teils der Bezugszeichen in den Fig. 6 und 7 verzichtet. Diesbezüglich sei auf die Positionen der Bezugszeichen in den vorhergehenden Fig. 1 bis 5 sowie die zugehörige Beschreibung verwiesen.

Es ist erkennbar, dass das Koppelmittel 63 des Wärmeübertragers 1 an dem korrespondierenden Koppelmittel 110 des Profilkörpers 111 um die Drehachse A nur beschränkt drehbar gelagert ist. Hierfür greift das stabförmige Koppelmittel 110 des Profilkörpers 111 in die teilkreisförmige Ausnehmung 64 des Koppelmittels 63 des Wärmeübertragers 1. Der Profilkörper 111 ist in Längsrichtung L in die Koppelöffnung 60 des Wärmeübertragers 1 eingeführt und hierdurch teilweise in der Koppelöffnung 60 gelagert. Dabei berührt der abschnittsweise kreisförmig-konkave Querschnitt der Koppelmittelöffnung 60 des Wärmeübertragers 1 auf der Innenseite IS der Oberwandung 61 den gegenüberliegenden konvexen Wandabschnitt 112 des Profilkörpers 111. Hierdurch ist eine Wärmebrücke ausbildet.

Die Anschlagfläche 120 der Schienenfußaufnahme 113 ist in der gezeigten Betriebslage geodätisch horizontal ausgerichtet, wodurch der Kammerboden 22 des Wärmeübertragers 1 stets in Richtung der Anschlussöffnung 30 abfallend ausgebildet ist. In Fig. 6 ist die minimal mögliche Steigung des Kammerbodens 22 gezeigt. Durch Drehen des Wärmeübertragers 1 um die Drehachse A nach unten verringert sich eine geodätisch horizontale Grundfläche der Anordnung. Die Drehung ist annähernd so weit durchführbar, bis nahezu der gesamte Wärmeübertrager 1 unterhalb des Profilkörpers 111 und damit unterhalb eines Schienenfußes positioniert ist.

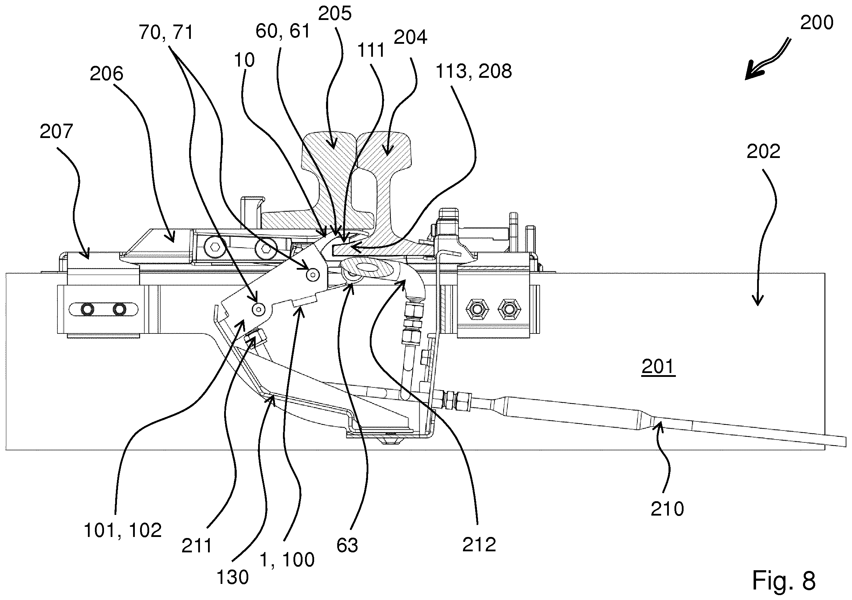

In **Fig. 8** ist eine Schienenheizeinrichtung 200 in einer möglichen Einbaulage an einer Weiche dargestellt. Die Schienenheizeinrichtung 200 weist eine Wärmeübertragervorrichtung 100 mit einem Wärmeübertrager 1 mit den Merkmalen gemäß der Fig. 1 bis 7 auf. Der Wärmeübertrager 1 ist in einem Schwellenfach 201 zwischen zwei Gleisschwellen 202 (nur eine sichtbar) angeordnet. Auf der Gleisschwelle 202 liegt ein Gleitstuhl 206 auf. Auch in diesem ist eine Kondensationskammer ausgebildet. Über den Gleitstuhl 206 hinweg verlaufen ein Schienensteg 204 und eine Weichenzunge 205, wobei letztere in der Horizontalen schwenkbar gleitend auf dem Gleitstuhl 206 gelagert ist.

Das zuvor beschriebene Profilelement 111 ist mit seiner Schienenfußaufnahme 113 auf den Schienenfuß 208 des Schienenstegs 204 aufgesteckt. Damit ist die Drehachse A benachbart und im Wesentlichen parallel zum Schienensteg 204 ausgerichtet. Sie liegt insbesondere unterhalb des Schienenfußes 208. Die Oberwandung 61 der Koppelöffnung 60 ist oberhalb des Schienenfußes 208 bis an den vertikalen Abschnitt des Schienenstegs 204 herangeführt. Außenseitig besteht ein Abstand zwischen der Oberwandung 61 und der Weichenzunge 205, welche sich in einer geschlossenen Position präsentiert, in der sie am Schienensteg 204 anliegt.

Die Anschlussöffnung des Wärmeübertragers 1 ist über einen Anschluss 211 hydraulisch mit einem Erdwärmerohr 210 verbunden. Ein zweiter Anschluss 212 führt zur Kondensationskammer im Gleitstuhl 206.

Man erkennt, dass der Wärmeübertrager 1 von einem Abdeckelement 102 abgedeckt ist, wodurch die Hohlräume 50, 51, 52, 53 (vgl. hierzu Fig. 1 bis 3) in Längsrichtung L verschlossen sind. Das Abdeckelement 102 ist über zwei Schrauben, welche in die zweiten Koppelmittel 70, insbesondere in die zwei Ausnehmungen 71, eingreifen, mit dem Wärmeübertrager 1 verbunden. Außerdem ist das Abdeckelement 102 als Teil eines Stellmittels 101 ausgebildet, welches den Wärmeübertrager 1 vor einem Drehen um die Drehachse A sichert. Das Stellmittel 101 ist weiterhin mit einem Bodenblech 130 verbunden, welches unterhalb des Wärmeübertragers 1 einen Freiraum für die Anschlüsse 211, 212 und die Erdwärmeleitung 210 freihält. Zur Fixierung des Bodenblechs 130 ist dieses außerdem mit einer Manschette 207 verbunden, welche auf die Schwelle 202 aufgesetzt und an dieser befestigt ist. An der Manschette 207 ist zudem auch der Profilkörper 111 befestigt.

**Bezugszeichenliste**

| | | | |
|---|---|---|---|
| 1 | Wärmeübertrager | | |
| | | | |
| 10 | Hauptbauteil | | |
| 20 | Kondensationskammer | 50 | Hohlkammer |
| 21 | Kammerdecke | 51 | Hohlkammer |
| 22 | Kammerboden | 52 | Hohlkammer |
| 23 | erste Seitenwandung | 53 | Hohlkammer |
| 24 | zweite Seitenwandung | 54 | Unterseite |
| 25 | erste Öffnung | | |
| 26 | zweite Öffnung | 60 | Koppelöffnung |
| 27 | erster Deckel | 61 | Oberwandung |
| 28 | zweiter Deckel | 62 | Unterwandung |
| | | 63 | Koppelmittel |
| 30 | Anschlussöffnung | 64 | Ausnehmung |
| | | 65 | Fortsatz |
| 40 | Zugelement | | |
| 41 | Zugelement | 70 | zweites Koppelmittel |
| 42 | Zugelement | 71 | Ausnehmung |
| 43 | Zugelement | | |
| 44 | Zugelement | 80 | Verschlusselement |
| 45 | Zugelement | 81 | Querbohrung |
| 46 | Zugelement | | |
| 47 | Zugelement | 100 | Wärmeübertragervorrichtung |
| 48 | Zugelement | | |
| | | 101 | Stellmittel |
| | | 102 | erstes Abdeckelement |
| | | | |
| | | 110 | korrespondierendes Koppelmittel |
| | | 111 | Profilkörper |
| | | 112 | Wandabschnitt |
| | | 113 | Schienenfußaufnahme |
| | | 114 | Rohrachse |
| 115 | Längsschlitz | 208 | Schienenfuß |
| 116 | Ausnehmung | | |
| 117 | Gewinde | 210 | Erdwärmerohr |
| 118 | Steg | 211 | Anschluss |
| 119 | langer Schenkel | 212 | Anschluss (Gleitstuhl) |
| 121 | Mittelabschnitt | | |
| 122 | kurzer Schenkel | A | Drehachse |
| | | AS | Außenseite |
| 130 | Bodenblech | B1 | Bauhöhe |
| | | IS | Innenseite |
| 200 | Schienenheizeinrichtung | L | Längsrichtung |
| 201 | Schwellenfach | Q | Querschnitt |
| 202 | erste Gleisschwelle | R1 | Radius |
| 204 | Schienensteg | R2 | Radius |
| 205 | Weichenzunge | S1 | Außenseite (Kammerboden) |
| 206 | Gleitstuhl | | |
| 207 | Manschette | | |

## Patentansprüche

1. **Wärmeübertrager** (1) für eine Anordnung zwischen zwei Gleisschwellen (202), insbesondere im Bereich von Weichen oder Schienenkreuzen, mit einer Kondensationskammer (20), in die eine Anschlussöffnung (30) zur Verbindung mit einem Erdwärmerohr (210) mündet, wobei die Kondensationskammer (20) längsgerichtet (L) rohrförmig von einem Hauptbauteil (10) radial eingefasst ist, und im Querschnitt (Q) eine Kammerdecke (21), einen gegenüberliegenden Kammerboden (22) und zwei sich gegenüberliegende sowie die Kammerdecke (21) und den Kammerboden (22) verbindende Seitenwandungen (23, 24) aufweist, wobei das Hauptbauteil (10) in Längsrichtung (L) zwei endseitige Öffnungen (25, 26) der Kondensationskammer (20) aufweist, die jeweils mit einem Deckel (27, 28) verschlossen sind, **dadurch gekennzeichnet, dass** das Hauptbauteil (10) ein Strangprofil ist.

2. Wärmeübertrager (1) nach Anspruch 1, **dadurch gekennzeichnet, dass** wenigstens einer der Deckel (27 ,28) wenigstens teilweise in die zu verschließende Öffnung (25, 26) eingesetzt ist.

3. Wärmeübertrager (1) nach einem der vorhergehenden Ansprüche, **dadurch gekennzeichnet, dass** wenigstens einer der Deckel (25, 26) mit dem Hauptbauteil (10) verschweißt ist.

4. Wärmeübertrager (1) nach einem der vorhergehenden Ansprüche, **dadurch gekennzeichnet, dass** die Kammerdecke (21) und der Kammerboden (22) wenigstens durch ein Zugelement (40, 41, 42, 43, 44, 45, 46, 47, 48) verbunden sind.

5. Wärmeübertrager (1) nach Anspruch 4, **dadurch gekennzeichnet, dass** das Zugelement (40, 41, 42, 43, 44, 45, 46, 47, 48) ein Zugsteg ist.

6. Wärmeübertrager (1) nach einem der Ansprüche 4 oder 5, **dadurch gekennzeichnet, dass** das Zugelement (40, 41, 42, 43, 44, 45, 46, 47, 48) in Längsrichtung (L) beabstandet zu wenigstens einer der Öffnungen (25, 26) endet.

7. Wärmeübertrager (1) nach einem der vorhergehenden Ansprüche, **dadurch gekennzeichnet, dass** das Hauptbauteil (10) in Richtung der Außenseite (S1) des Kammerbodens (22) wenigstens eine in Längsrichtung (L) rohrförmig verlaufende Hohlkammer (50, 51, 52, 53) aufweist.

8. Wärmeübertrager (1) nach einem der vorhergehenden Ansprüche, **dadurch gekennzeichnet, dass** das Hauptbauteil (10) in Querrichtung (Q) auf Seiten der ersten Seitenwandung (23) ein Koppelmittel (63) mit einer längsgerichteten (L) Drehachse (A) aufweist, um den Wärmeübertrager (1) unterschiedlich schräg auszurichten.

9. Wärmeübertrager (1) nach Anspruch 8, **dadurch gekennzeichnet, dass** das Koppelmittel (63) in einer entlang der Längsrichtung (L) offenen Koppelöffnung (60) des Hauptbauteils (10) angeordnet ist, wobei eine Oberwandung (61) der Koppelöffnung (60) näher an der Kammerdecke (21) angeordnet ist als eine Unterwandung (62) der Koppelöffnung (60).

10. Wärmeübertrager (1) nach Anspruch 9, **dadurch gekennzeichnet, dass** die Oberwandung (61) der Koppelöffnung (60) innenseitig (IS) einen wenigstens abschnittsweise kreisförmig-konkaven Querschnitt mit einem Radius (R1) um die Drehachse (A) des Koppelmittels (63) hat.

11. Wärmeübertrager (1) nach einem der Ansprüche 9 oder 10, **dadurch gekennzeichnet, dass** das Koppelmittel (63) im Bereich der Unterwandung (62) der Koppelöffnung (60) angeordnet ist.

12. Wärmeübertrager (1) nach einem der Ansprüche 9 bis 11, **dadurch gekennzeichnet, dass** das Koppelmittel (63) eine im Querschnitt (Q) teilkreisförmige Ausnehmung (64) mit einem Radius (R2) um die Drehachse (A) ist, wobei die Ausnehmung (64) auf der Innenseite (IS) der Koppelöffnung (60) offen ausgebildet ist.

13. Wärmeübertrager (1) nach einem der Ansprüche 8 bis 12, **dadurch gekennzeichnet, dass** beabstandet zum Koppelmittel (63) ein zweites Koppelmittel (70) vom Hauptbauteil (10) zur Ankopplung eines Stellmittels (101) ausgebildet ist.

14. **Wärmeübertragervorrichtung (100)** mit einem Wärmeübertrager (1) nach einem der vorhergehenden Ansprüche, wobei das Hauptbauteil (10) in Querrichtung (Q) auf Seiten der ersten Seitenwandung (23) ein Koppelmittel (63) mit einer längsgerichteten (L) Drehachse (A) aufweist, um den Wärmeübertrager (1) unterschiedlich schräg auszurichten, und wobei das Koppelmittel (63) an einem korrespondierenden Koppelmittel (110) um die Drehachse (A) wenigstens beschränkt drehbar gelagert ist.

15. Wärmeübertragervorrichtung (100) nach Anspruch 14, **dadurch gekennzeichnet, dass** beabstandet zum Koppelmittel (63) ein zweites Koppelmittel (70) vom Hauptbauteil (10) mit einem Stellmittel (101) zum Drehen und Festlegen des Wärmeübertragers (1) um die Drehachse (A) gekoppelt ist.

16. Wärmeübertragervorrichtung (100) nach einem der Ansprüche 14 oder 15, **dadurch gekennzeichnet, dass** das Koppelmittel (63) in einer entlang der Längsrichtung (L) offenen Koppelöffnung (60) des Hauptbauteils (10) angeordnet ist, wobei eine Oberwandung (61) der Koppelöffnung (60) näher an der Kammerdecke (21) angeordnet ist als eine Unterwandung (62) der Koppelöffnung (60), und wobei das korrespondierende Koppelmittel (110) Teil eines Profilkörpers (111) ist, der drehbar um die Drehachse (A) wenigstens teilweise in der Koppelöffnung (60) gelagert ist.

17. Wärmeübertragervorrichtung (100) nach Anspruch 16, **dadurch gekennzeichnet, dass** die Oberwandung (61) der Koppelöffnung (60) innenseitig (IS) einen wenigstens abschnittsweise kreisförmig-konkaven Querschnitt mit einem Radius (R1) um die Drehachse (A) des Koppelmittels (63) hat, wobei der Profilkörper (111) eine der Innenseite (IS) der Oberwandung (61) gegenüberliegenden konvexen Wandabschnitt (112) aufweist, der im Wesentlichen den gleichen Radius (R1) um die Drehachse (A) aufweist.

18. **Schienenheizeinrichtung** (200) mit wenigstens einer Wärmeübertragervorrichtung (100) nach einem der Ansprüche 14 bis 17, wobei die Anschlussöffnung (10) hydraulisch mit einem Erdwärmerohr (210) verbunden ist, und wobei der Wärmeübertrager (1) in einem Schwellenfach (201) zwischen zwei Gleisschwellen (202) angeordnet und die Drehachse (A) benachbart und im Wesentlichen parallel zu einem Schienensteg (204) ausgerichtet ist.

## Claims

1. **Heat exchanger** (1) for an arrangement between two main-track sleepers (202), in particular in the region of switches or rail crossings, having a condensation chamber (20) into which a connecting opening (30) leads for connection to a geothermal heat pipe (210), wherein the condensation chamber (20) is radially surrounded by a tubular main part (10) in the longitudinal direction (L), and has, in cross section (Q), a chamber ceiling (21), an opposite chamber base (22) and two side walls (23, 24) that are opposite and connect the chamber ceiling (21) and the chamber base (22), wherein the main part (10) comprises two end openings (25, 26) of the condensation chamber (20) in the longitudinal direction (L), each of which is closed by a cover (27, 28), **characterised in that** the main part (10) is an extruded profile.

2. Heat exchanger (1) according to claim 1, **characterised in that** at least one of the covers (27, 28) is at least partly inserted into the opening (25, 26) to be closed.

3. Heat exchanger (1) according to any one of the preceding claims, **characterised in that** at least one of the covers (25, 26) is welded to the main part (10).

4. Heat exchanger (1) according to any one of the preceding claims, **characterised in that** the chamber cover (21) and the chamber base (22) are connected at least by a tensile element (40, 41, 42, 43, 44, 45, 46, 47, 48).

5. Heat exchanger (1) according to claim 4, **characterised in that** the tensile element (40, 41, 42, 43, 44, 45, 46, 47, 48) is a pulling web.

6. Heat exchanger (1) according to one of claims 4 or 5, **characterised in that** the tensile element (40, 41, 42, 43, 44, 45, 46, 47, 48) ends at a distance from at least one of the openings (25, 26) in the longitudinal direction (L).

7. Heat exchanger (1) according to any one of the preceding claims, **characterised in that** the main part (10) has at least one hollow chamber (50, 51, 52, 53) running in the longitudinal direction (L) in a tubular manner in the direction of the outer side (S1) of the chamber base (22).

8. Heat exchanger (1) according to any one of the preceding claims, **characterised in that** the main part (10) has a coupling means (63) with a longitudinal (L) axis of rotation (A) in the transverse direction (Q) on sides of the first side wall (23), in order to align the heat exchanger (1) at different oblique angles

9. Heat exchanger (1) according to claim 8, **characterised in that** the coupling means (63) is arranged in a coupling opening (60) of the main part (10) that is open along the longitudinal direction (L), wherein an upper wall (61) of the coupling opening (60) is arranged closer to the chamber cover (21) than a lower wall (62) of the coupling opening (60).

10. Heat exchanger (1) according to claim 9, **characterised in that** the upper wall (61) of the coupling opening (60) has, on the inner side (IS), a cross section that is circular-concave at least in sections with a radius (R1) about the axis of rotation (A) of the coupling means (63).

11. Heat exchanger (1) according to any of claims 9 or 10, **characterised in that** the coupling means (63) is arranged in the region of the lower wall (62) of the coupling opening (60).

12. Heat exchanger (1) according to any of claims 9 to 11, **characterised in that** the coupling means (63) is a recess (64) with a part-circular cross section (Q) having a radius (R2) about the axis of rotation (A), wherein the recess (64) is open on the inner side (IS) of the coupling opening (60).

13. Heat exchanger (1) according to any of claims 8 to 12, **characterised in that** a second coupling means (70) of the main part (10) is designed at a distance from the coupling means (63) for coupling an adjusting means (101).

14. **Heat exchange device (100)** having a heat exchanger (1) according to any one of the preceding claims, wherein the main part (10) has, in the transverse direction (Q) on sides of the first side wall (23), a coupling means (63) with a longitudinal (L) axis of rotation (A), in order to align the heat exchanger (1) at different oblique angles, and wherein the coupling means (63) is mounted on a corresponding coupling means (110) so as to be rotatable in at least a limited manner about the axis of rotation (A).

15. Heat exchange device (100) according to claim 14, **characterised in that** a second coupling means (70) of the main part (10) having an adjusting means (101) for rotating and fixing the heat exchanger (1) is coupled at a distance from the coupling means (63) about the axis of rotation (A).

16. Heat exchange device(100) according to any of claims 14 or 15, **characterised in that** the coupling means (63) is arranged in a coupling opening (60) of the main part (10) that is open along the longitudinal direction (L), wherein an upper wall (61) of the coupling opening (60) is arranged closer to the chamber cover (21) than a lower wall (62) of the coupling opening (60), and wherein the corresponding coupling means (110) is part of a profile body (111) that is at least partly mounted in the coupling opening (60) so as to be rotatable about the axis of rotation (A).

17. Heat exchange device (100) according to claim 16, **characterised in that** the upper wall (61) of the coupling opening (60) has, on the inner side (IS), a cross section that is circular-concave at least in sections with a radius (R1) about the axis of rotation (A) of the coupling means (63), wherein the profile body (111) has a convex wall section (112) that is opposite the inner side (IS) of the upper wall (61) and that has substantially the same radius (R1) about the axis of rotation (A).

18. **Track heating system** (200) having at least one heat transfer device (100) according to any of claims 14 to 17, wherein the connecting opening (10) is hydraulically connected to a geothermal heat pipe (210), and wherein the heat exchanger (1) is arranged in a sleeper space (201) between two main-track sleepers (202) and the axis of rotation (A) is aligned adjacent and substantially parallel to a rail web (204).

## Revendications

1. **Echangeur de chaleur** (1) pour un agencement entre deux traverses (202), en particulier dans la zone d'aiguilles ou de croisements, avec une chambre de condensation (20), dans laquelle une ouverture de raccordement (30) débouche pour le raccordement avec un tube géothermique (210), dans lequel la chambre de condensation (20) est entourée radialement sur la longueur (L) en forme de tube par un composant principal (10) et présente, en section transversale (Q), un plafond de chambre (21), un sol de chambre (22) opposé et deux parois latérales (23, 24) opposées et raccordant le plafond de chambre (21) et le sol de chambre (22), dans lequel le composant principal (10) présente, dans le sens longitudinal (L), deux ouvertures (25, 26) côté extrémité de la chambre de condensation (20) qui sont respectivement fermées par un couvercle (27, 28), **caractérisé en ce que** le composant principal (10) est un profilé extrudé.

2. Echangeur de chaleur (1) selon la revendication 1, **caractérisé en ce qu'**au moins un des couvercles (27, 28) est inséré au moins partiellement dans l'ouverture (25, 26) à refermer.

3. Echangeur de chaleur (1) selon l'une des revendications précédentes, **caractérisé en ce qu'**au moins un des couvercles (25, 26) est soudé au composant principal (10).

4. Echangeur de chaleur (1) selon l'une des revendications précédentes, **caractérisé en ce que** le plafond de chambre (21) et le sol de chambre (22) sont raccordés au moins par un élément tracteur (40, 41, 42, 43, 44, 45, 46, 47, 48).

5. Echangeur de chaleur (1) selon la revendication 4, **caractérisé en ce que** l'élément tracteur (40, 41, 42, 43, 44, 45, 46, 47, 48) est une nervure de traction.

6. Echangeur de chaleur (1) selon l'une des revendications 4 ou 5, **caractérisé en ce que** l'élément tracteur (40, 41, 42, 43, 44, 45, 46, 47, 48) se termine dans le sens longitudinal (L) à distance d'au moins une des ouvertures (25, 26).

7. Echangeur de chaleur (1) selon l'une des revendications précédentes, **caractérisé en ce que** le composant principal (10) présente, en direction du côté extérieur (S1) du sol de chambre (22), au moins une chambre creuse (50, 51, 52, 53) s'étendant en forme de tube dans le sens longitudinal (L).

8. Echangeur de chaleur (1) selon l'une des revendications précédentes, **caractérisé en ce que** le composant principal (10) présente, dans le sens transversal (Q) sur des côtés de la première paroi latérale (23), un moyen de couplage (63) avec un axe de rotation (A) longitudinal (L) afin d'orienter l'échangeur de chaleur (1) différemment en oblique.

9. Echangeur de chaleur (1) selon la revendication 8, **caractérisé en ce que** le moyen de couplage (63) est agencé dans une ouverture de couplage (60) ouverte du composant principal (10) le long du sens longitudinal (L), dans lequel une paroi supérieure (61) de l'ouverture de couplage (60) est agencée plus près du plafond de chambre (21) qu'une paroi inférieure (62) de l'ouverture de couplage (60).

10. Echangeur de chaleur (1) selon la revendication 9, **caractérisé en ce que** la paroi supérieure (61) de l'ouverture de couplage (60) présente, côté intérieur (IS), une section transversale concave de forme circulaire au moins par sections avec un rayon (R1) autour de l'axe de rotation (A) du moyen de couplage (63).

11. Echangeur de chaleur (1) selon l'une des revendications 9 ou 10, **caractérisé en ce que** le moyen de couplage (63) est agencé dans la zone de la paroi inférieure (62) de l'ouverture de couplage (60).

12. Echangeur de chaleur (1) selon l'une des revendications 9 à 11, **caractérisé en ce que** le moyen de couplage (63) est un évidement (64) de forme partiellement circulaire en section transversale (Q) avec un rayon (R2) autour de l'axe de rotation (A), dans lequel l'évidement (64) est réalisé de manière ouverte sur le côté intérieur (IS) de l'ouverture de couplage (60).

13. Echangeur de chaleur (1) selon l'une des revendications 8 à 12, **caractérisé en ce qu'**un second moyen de couplage (70) du composant principal (10) est réalisé à distance du moyen de couplage (63) pour le couplage d'un moyen de réglage (101).

14. **Dispositif d'échangeur de chaleur (100)** avec un échangeur de chaleur (1) selon l'une des revendications précédentes, dans lequel le composant principal (10) présente, dans le sens transversal (Q) sur des côtés de la première paroi latérale (23), un moyen de couplage (63) avec un axe de rotation (A) longitudinal (L) afin d'orienter l'échangeur de chaleur (1) différemment en oblique, et dans lequel le moyen de couplage (63) est logé de façon rotative au moins limitée au niveau d'un moyen de couplage (110) correspondant autour de l'axe de rotation (A).

15. Dispositif d'échangeur de chaleur (100) selon la revendication 14, **caractérisé en ce qu'**à distance du moyen de couplage (63), un second moyen de couplage (70) du composant principal (10) est couplé à un moyen de réglage (101) pour la rotation et la fixation de l'échangeur de chaleur (1) autour de l'axe de rotation (A).

16. Dispositif d'échangeur de chaleur (100) selon l'une des revendications 14 ou 15, **caractérisé en ce que** le moyen de couplage (63) est agencé dans une ouverture de couplage (60) ouverte du composant principal (10) le long du sens longitudinal (L), dans lequel une paroi supérieure (61) de l'ouverture de couplage (60) est agencée plus près du plafond de chambre (21) qu'une paroi inférieure (62) de l'ouverture de couplage (60), et dans lequel le moyen de couplage (110) correspondant fait partie d'un corps profilé (111) qui est logé de manière rotative autour de l'axe de rotation (A) au moins partiellement dans l'ouverture de couplage (60).

17. Dispositif échangeur de chaleur (100) selon la revendication 16, **caractérisé en ce que** la paroi supérieure (61) de l'ouverture de couplage (60) présente, coté intérieur (IS), une section transversale concave de forme circulaire au moins par sections avec un rayon (R1) autour de l'axe de rotation (A) du moyen de couplage (63), dans lequel le corps profilé (111) présente une section de paroi (112) convexe, opposée au côté intérieur (IS) de la paroi supérieure (61), qui présente sensiblement le même rayon (R1) autour de l'axe de rotation (A).

18. **Dispositif de chauffage de rail** (200) avec au moins un dispositif d'échangeur de chaleur (100) selon l'une des revendications 14 à 17, dans lequel l'ouverture de raccordement (10) est reliée par voie hydraulique à un tube géothermique (210), et dans lequel l'échangeur de chaleur (1) est agencé dans une case (201) entre deux traverses (202) et l'axe de rotation (A) est orienté de manière contiguë et sensiblement parallèle à une nervure de rail (204).
